Europäisches Patentamt

(19) European Patent Office

Office européen des brevets

(11) Publication number : **0 371 063 B1**

## (12) EUROPEAN PATENT SPECIFICATION

(45) Date of publication of patent specification :
**05.02.92 Bulletin 92/06**

(51) Int. Cl.⁵ : **F16L 19/08**

(21) Application number : **88906963.9**

(22) Date of filing : **08.08.88**

(86) International application number :
**PCT/GB88/00654**

(87) International publication number :
**WO 89/01586 23.02.89 Gazette 89/05**

(54) FIRE RESISTANT PIPE COUPLINGS.

(30) Priority : **10.08.87 GB 8718904**

(43) Date of publication of application :
**06.06.90 Bulletin 90/23**

(45) Publication of the grant of the patent :
**05.02.92 Bulletin 92/06**

(84) Designated Contracting States :
**DE GB**

(56) References cited :
**EP-A- 0 030 843**
**WO-A-88/04385**
**FR-A- 2 177 123**

(73) Proprietor : **GEORGE FISCHER CASTINGS LIMITED**
**P.O. Box 128 Kempston Road**
**Bedford MK42 9DH (GB)**

(72) Inventor : **MILLARD, Bryan, Raymond**
**52 Deacon Avenue Kempston**
**Bedford MK42 7DT (GB)**

(74) Representative : **Lightfoot, Robert Oscar et al**
**RAWORTH, MOSS & COOK, Raworth House,**
**36 Sydenham Road**
**Croydon, Surrey CR0 2EF (GB)**

EP 0 371 063 B1

Jouve, 18, rue Saint-Denis, 75001 PARIS

## Description

The present invention relates to fire resistant pipe couplings.

By the term "coupling" as used herein is meant any coupling, junction, joint or fitting which can be fitted around a pipe, whether smooth or threaded, for the purpose of providing a fluid-tight connection between the pipe and some other piece of equipment such as one or more other pipes, meters, vessels, valves and the like.

Frequently to effect the fluid seal in pipe couplings a flexible gasket, such as a wedge-shaped rubber ring, is used which is held in place by means of clamping bolts, compression nuts, tensioned metal bands, and the like. Although under normal conditions of use such seals are very effective, when subjected to high temperatures such as in a fire the flexible gasket, which is generally made of an organic polymeric material, first softens, then shrinks and finally breaks down both chemically and structurally. The effect of shrinkage and break down in the seal is almost invariably to cause it to fail seriously, and even softening of the gasket can result in significant fluid leakage because of the tendency of the softened gasket to flow under the compressive forces that are encountered in such coupling seals.

Although a degree of fluid leakage can be tolerated both during and immediately after a fire for some of the fluids, such as water, steam and air, commonly used in domestic and industrial premises , a serious leakage of a flammable substance such as petrol, oil or natural gas in such circumstances represents a major hazard to the fire and rescue services. This hazard is particularly prevalent where compression joints, rather than threaded joints, have been used, since the manufacturing tolerances of compression joints are generally larger than for threaded joints.

A number of fire resistant pipe couplings have been proposed such as those described in GB-A-1441207 and in US-A-3375016, but generally they are expensive to manufacture, are usually only suitable for pipes and couplings of relatively small manufacturing tolerances, and cannot cope easily with misalignment of the pipe and coupling. Furthermore the sealing systems of these couplings are not readily adaptable for threaded joints.

In FR-A-2177123 there is described a connection for rigid piping of all diameters, made of metal or other materials, comprising in the first place a body inside which is introduced at least one end of the piping to be connected, in the second place, for each pipe to be connected, one plastic O-ring, one protective washer, one round circlip made of hard elastic material, and one clamping device able to move relative to the body approximately along the axis of the piping to be connected and presenting an inner surface capable of resting on the aforesaid round circlip, the protective washer, following tightening up, abutting against the corresponding end of the connection body, the round circlip, following tightening up, coming to rest against the protective washer, characterised by the fact that at the end of the connection body, an annular housing is provided comprising two parts connected to each other, one, disposed to the axis of the body, shaped like a ring of approximately constant surface, and the other, disposed towards the end of the body having a cross-section, along a plane perpendicular to the axis of the body, shaped like a ring the surface of which grows progressively as one moves towards the said end of the body, a bush made of malleable material being interposed between the plastic O-ring and the protective washer, the said bush having an external diameter at most equal to the maximum diameter of the corresponding end housing and able to, possibly, form a single piece with the protective washer which applies against it. Here, however, the purpose of the malleable bush is solely to prevent creep of the O-ring at high pressure and it is not capable of sealing the gap between the pipe and the connection body independently of the plastic O-ring. Furthermore, the connection described in FR-A-2177123 is not apparently fire resistant.

In WO-A-88/04385 is disclosed a compression coupling utilising a sealing member comprising a mixture of a vermieulite and graphite. This document falls within the terms of Art 54(3).

In accordance with the present invention there is provided a fire resistant coupling for a pipe comprising a coupling body having an opening therein for receiving the pipe, a flexible gasket adapted to surround the pipe and seal the gap between the coupling body and the pipe when the coupling is in use, and means for urging the flexible gasket into the gap, wherein the coupling includes a deformable gasket adapted to surround the pipe and to lie adjacent the flexible gasket when the coupling is in use, characterised in that the deformable gasket is of graphite and is of a size sufficient to seal the said gap independently of the flexible gasket when urged into the gap by the means.

Deformable graphite gaskets are known, particularly for sealing rotating joints, shafts and bearings, but because of graphite's limited deformability it has not heretofore been considered as a suitable gasket material in situations where, as in compression joints, comparatively rough unmachined surfaces have to be sealed and the manufacturing tolerances of the components are relatively large. Here, however, it is proposed to use graphite, not as the sole sealing member, but as a back-up seal to a conventional flexible gasket, such as an 'O' ring.

Preferably the flexible gasket and the graphite gasket are in direct contact so that the two gaskets react against each other to assist in sealing the gap between the coupling body and the pipe.

Any conventional form of graphite which is suitable for gaskets can be used, but the preferred form is that produced from pressed corrugated ribbons. One particularly suitable material is that sold by Henry Crossley (Packings) Limited under the trade name "Crossfoil". This material consists of about 99% pure graphite in the form of an expanded tape which can be wound on a former and the resulting ring pressed in a die to form seals of any desired thickness and cross-section. Although generally fitted in the pipe coupling as a separate component, the graphite gasket could be bonded to the face of a pressure washer for transmitting the urging of the urging means to the flexible gasket.

Because of graphite's known properties, including natural lubricity, deformability, dimensional stability when heated and volumetric elasticity under compression, it will be appreciated by those skilled in the art that the incorporation of such a material into a pipe coupling can be effected easily for a wide variety of joints.

When in the form of a compression joint, the coupling body is adapted to receive a relatively smooth pipe and its opening is desirably defined by inwardly tapering surface for receiving the flexible gasket, the gasket preferably being a rubber 'O' ring. Generally it is desirable for a locking member, such as a pipe gripping ring, to be present for resisting the removal of the pipe from the coupling after assembly thereof, optionally the locking member transmitting the urging of the urging means to the flexible gasket. In the preferred embodiment the coupling body is threaded and the urging means comprises a correspondingly threaded compression nut having an opening therein for receiving the pipe, this opening being similarly defined by inwardly tapering surfaces for receiving the gripping ring.

The material of which the pipe and coupling body are made are not critical to the present invention, provided of course that such material can itself resist the effects of a fire without allowing the fluid it is carrying to leak appreciably. Examples of suitable materials are steel, bronze, malleable cast iron, ductile cast iron and a wide variety of non-ferrous metals. The pipe may be coated with paint or the like or uncoated. In the preferred embodiment, the pipe is of steel and the coupling body is of malleable cast iron.

Because of graphite's known chemical inertness, the couplings of the present invention can be used with a wide range of fluids, including natural gas and high pressure water for fire sprinkler systems. Even when the flexible gasket fails in a fire due to shrinkage or destruction the graphite gasket will take over the sealing function from the flexible gasket sufficient to meet the requisite fire safety regulations.

One embodiment of the present invention will now be described, by way of example, with reference to the accompanying drawings, in which:-

Figure 1 is a sectional elevational view of a portion of a rotationally symmetrical pipe coupling of the present invention of the compression type in its partially assembled state, and

Figure 2 is a sectional elevational view of the same portion of the pipe coupling of Figure 1, but in its fully assembled state.

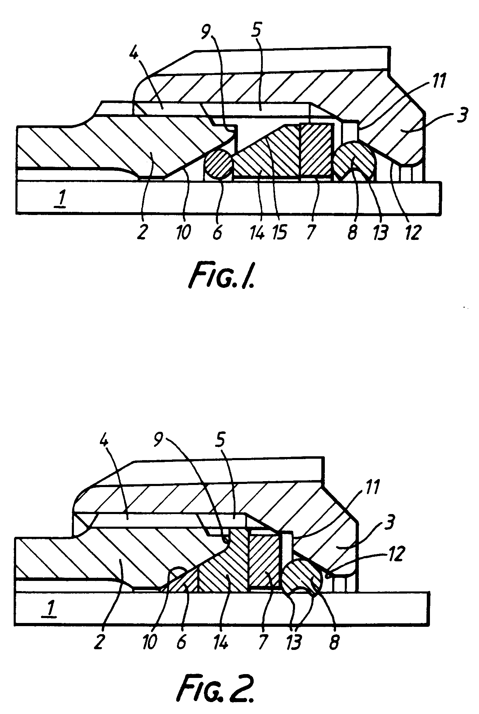

Referring first to Figure 1, a smooth round pipe 1 carries loosely on it a cylindrical coupling body 2 and an engaging compression nut 3, both of malleable cast iron. The body 2 is externally threaded at 4, whilst the nut 3 is correspondingly internally threaded at 5, Figure 1 showing the nut 3 partially screwed onto the body 2. Between the body 2 and the nut 3, the pipe 1 carries along its length a rubber 'O' ring 6, a flat steel pressure washer 7 and a steel locking ring 8. Between the washer 7 and the 'O' ring 6 is a graphite gasket 14 as described more fully later.

The end face 9 of the body 2 is provided with an inward taper 10 to its pipe opening, against which taper the 'O' ring 6 is urged by the face of the flat washer 7 adjacent the graphite gasket 14 when the nut 3 is screwed onto the body 2. Similarly the inner shoulder 11 of the pipe opening of the nut 3 is provided with an inward taper 12 against which the locking ring 8 is urged by the other face of the washer 7 when the nut 3 is screwed onto the body 2. In both cases the sizes and orientations of the tapers 10 and 12 relative to the 'O' ring 6 and locking ring 8, respectively, are such that the greater the tightening of the nut 3 onto the body 2 the harder will the 'O' ring 6 and locking ring 8 be urged against the pipe 1. Furthermore, the lengths of the tapers 10 and 12 are chosen so that the coupling can fit around pipes having diameters which can vary across a relatively large range.

The locking ring 8 is generally 'C' shaped in cross-section with the ridges 13 formed by the points of the 'C' being inwardly directed so as to dig into and grip the pipe 1 when urged thereagainst. As can be seen, the outer lateral faces of the 'C' shaped locking ring are indented so as to provide sharper ridges 13 than would be the case if the faces were fully rounded. By providing sharp ridges the digging in of the locking ring is improved, particularly with a galvanised pipe. The locking ring 8 is radially expandable and contractible by being in the form of an incomplete circle, only extending about 325° around the pipe. This construction of locking ring, in combination with the taper 12 of the nut 3, allows the coupling not only to grip pipes of varying diameters but also to provide a considerable degree of rigidity to the final joint. Variations in the construction and operation of the locking ring 8 are described in UK-A-1530205 and EP-B-0073050.

The graphite gasket 14 is in the form of a shaped ring of approximately equal diameter to that of the flat washer 7 and disposed between it and the 'O' ring 6. Because it also functions as a compressive force transmitter, both faces of gasket 14 are flat, but a bevel 15 is provided on the face of the gasket against which the 'O' ring 6 presses in order to mate with the taper 10 of the coupling opening, when the nut 3 is screwed into the body 2.

The gasket 14 was formed by winding a suitable length of "Crossfoil" expanded graphite tape on a former and then pressing the resulting ring into a shaped die. As it can be seen from Figs. 1 and 2, the graphite gasket 14 is of a sufficient thickness that on tightening up of the coupling it fills the entire space between the 'O' ring 6 and the flat washer 7 without the washer 7 touching the coupling body 2.

Referring now to Figure 2, the effect of screwing the compression nut 3 tightly onto the coupling body 2 is firstly to force the 'O' ring 6 down the body opening taper 10 and into sealing engagement with the pipe 1 and the coupling body 2. Because the graphite gasket 14 acts as a force transmitter and because it is plastically deformable, it is squeezed partially into the voids around the 'O' ring and around the coupling end face 9. It will be noted that the thickness of the 'O' ring 6 in relation to the angle of the body opening taper 10 is such that there is no direct contact between the washer 7 and the 'O' ring 6.

Simultaneously with the forcing of the 'O' ring 6 down body opening taper 10, the locking ring 8 is forced down nut opening taper 12. As it is so forced it contracts against the pipe 1 and its ridges 13 dig into and thereby grip the pipe 1. It will be noted that even when the nut 3 is fully tightened its internal shoulder 11 does not contact the washer 7. By maintaining such a gap all of the compressive force of the nut 3 is exerted through locking ring 8 and thereby ensures that maximum possible gripping of the pipe occurs. Similarly it will be noted that even when the nut 3 is fully tightened the washer 7 does not contact the coupling body end face 9. If contact were made it would reduce the force exerted on the 'O' ring 6 which holds it in sealing engagement with the pipe 1 and the coupling body 2.

It will thus be appreciated that the sealing of the compressed 'O' ring 6 on the one hand and the gripping of the pipe 1 by the locking ring 8 on the other are totally dependant on the axial forces being transmitted between the two by the washer 7 through the graphite gasket 14. In the course of a fire, those forces will be reduced by the softening or decomposition of the 'O' ring 6, but the graphite gasket 14 will still have sufficient strength to maintain the seal and prevent the washer 7 and the locking ring 8 from significantly moving; hence the rigidity of the joint is maintained.

For water pipes the standard 'O' ring is a synthetic rubber designated "EPDM", whilst for gas pipes a nitrile rubber is used designated "NBR". Both of these rubbers soften at about 130°C and progressively deteriorate above about 200°C. By contrast the graphite is thermally stable and unaffected by heat up to a temperature of at least 2000°C. It can therefore maintain the rigidity of the joint and thereby prevent any movement of the pipe relative to the coupling resulting from the effects of a fire, which with prior art couplings can cause fluid leakage.

As with all good compression joints, the illustrated coupling can be fitted onto a pipe by simply pushing the coupling in a loosely assembled state onto the pipe and tightening the nut 3 relative to the body 2 up to the required torque. An important advantage of this coupling is however its ability to accommodate relatively large manufacturing tolerances and some degree of misalignment between coupling and pipe centre lines. Because of manufacturing tolerances, similar components will vary in side, the three main ones being pipe diameter, coupling body opening diameter and taper angle of the body opening.

In the "minimum compression" condition, i.e. the combination of minimum pipe diameter, maximum body opening diameter and minimum opening taper angle, the plastic deformation of the graphite gasket will large and the contact face between the 'O' ring and the graphite gasket will be well inside the end face of the body.

By contrast in the "maximum compression" condition, i.e. the combination of maximum pipe diameter, minimum body opening diameter and maximum opening taper angle, the plastic deformation of the graphite gasket will be small and the contact face between the 'O' ring and the graphite gasket will lie close to the end face of the body inside the taper.

By means of the illustrated arrangement of 'O' ring,. pressure washer and locking ring, a substantially equal stress can be applied to the 'O' ring for a given nut-tightening torque despite variations in manufacturing tolerances. Furthermore, the locking ring, being radially expandable, will grip pipes equally despite variations in pipe diameter tolerances.

In addition the design of the illustrated coupling provides very good sealing in normal use and an acceptable level of sealing both during and after a fire at relatively low manufacturing and installations costs.

**Claims**

1. A fire resistant coupling for a pipe comprising a coupling body (2) having an opening therein for receiving the pipe (1), a flexible gasket (6) adapted to surround the pipe (1) and seal the gap between the coupling body (2) and the pipe (1) when the coupling is in use, and means (3) for urging the flexible gasket (6) into the gap, wherein the coupling includes a deformable gasket (14) adapted to surround the pipe (1) and to lie adjacent the flexible gasket (6) when the coupling is in use, characterised in that the deformable gasket (14) is of graphite and is of a size sufficient to seal the said gap independently of the flexible gasket (6) when urged into the gap by the means (3).

2. A coupling as claimed in claim 1 wherein the graphite gasket (14) is disposed in the form of a ring adjacent a pressure washer (7) for transmitting the urging of the urging means (3) to the flexible gasket (6).

3. A coupling as claimed in claim 1 or claim 2 wherein the graphite gasket (14) is disposed so as to transmit the urging of the urging means (3) direct to the flexible gasket (6).

4. A coupling as claimed in any one of the preceding claims wherein the coupling body (2) is adapted to receive a relatively smooth pipe (1) and its opening is defined by inwardly tapering surface for receiving the flexible gasket (6).

5. A coupling as claimed in claim 4 wherein the graphite gasket (14) is shaped so as to mate with the inwardly tapering surface of the coupling body opening.

6. A coupling as claimed in any one of the preceding claims wherein the graphite gasket (14) is formed from expanded graphite tape.

7. A coupling as claimed in any one of the preceding claims wherein the flexible gasket (6) is a rubber 'O' ring.

8. A coupling as claimed in any one of the preceding claims including a locking member (8) for resisting the removal of the pipe (1) from the coupling after assembly thereof.

9. A coupling as claimed in claim 8 wherein the locking member (8) transmits the urging of the urging means (3) to the flexible gasket (6).

10. A coupling as claimed in claim 8 or claim 9 wherein the locking member (8) is in the form of a pipe gripping ring.

11. A coupling as claimed in any one of the preceding claims wherein the coupling body (2) is threaded and the urging means (3) comprises a correspondingly threaded compression nut having an opening therein for receiving the pipe (1).

12. A coupling as claimed in claim 11 when appendant to claim 10 wherein the opening for the compression nut is defined by inwardly tapering surfaces for receiving the gripping ring.

## Patentansprüche

1. Feuerwiderstandsfähige Kupplung für ein Rohr mit einem Kupplungskörper(2), der eine Öffnung zur Aufnahme des Rohres(1) aufweist, mit einer flexiblen Dichtung(6), die das Rohr(1) umschließt und den Spalt zwischen dem Kupplungskörper(2) und dem Rohr(1) im Gebrauch der Kupplung abdichtet, und mit Mitteln(3) zum Andrücken der flexiblen Dichtung(6) in dem Spalt, wobei die Kupplung eine verformbare Dichtung(14) aufweist, die so ausgelegt ist, daß sie das Rohr(1) umfaßt und im Gebrauch der Kupplung der flexiblen Dichtung(6) benachbart liegt, dadurch gekennzeichnet, daß die verformbare Dichtung(14) aus Graphit besteht und eine Größe aufweist, die ausreicht, den Spalt unabhängig von der flexiblen Dichtung(6) abzudichten, wenn sie durch die Mittel(3) in den Spalt gedrückt ist.

2. Kupplung nach Anspruch 1, wobei die Graphit-Dichtung (14) in Form eines Ringes benachbart zu einer Druckscheibe(7) angeordnet ist, um den Druck der Andruckmittel (3) auf die flexible Dichtung(6) zu übertragen.

3. Kupplung nach Anspruch 1 oder 2, wobei die Graphit-Dichtung(14) so angeordnet ist, daß sie den Druck der Andruckmittel(3) direkt auf die flexible Dichtung(6) überträgt.

4. Kupplung nach einem der vorhergehenden Ansprüche, wobei der Kupplungskörper(2) zum Aufnehmen eines vergleichsweise glatten Rohres(1) ausgelegt ist und seine Öffnung durch eine sich nach innen verjüngende Oberfläche zum Aufnehmen der flexiblen Dichtung(6) begrenzt ist.

5. Kupplung nach Anspruch 4, wobei die Graphit-Dichtung (14) so geformt ist, daß sie mit der sich nach innen verjüngenden Oberfläche der Öffnung des Kupplungskörpers ineinandergreift.

6. Kupplung nach einem der vorhergehenden Ansprüche, wobei die Graphit-Dichtung(14) aus einem gestreckten Graphit-Streifen gebildet ist.

7. Kupplung nach einem der vorhergehenden Ansprüche, wobei die flexible Dichtung(6) ein Gummi-O-Ring ist.

8. Kupplung nach einem der vorhergehenden Ansprüche, mit einem Sperrglied(8), das einem Entfernen des Rohres(1) aus der Kupplung nach deren Montage widersteht.

9. Kupplung nach Anspruch 8, wobei das Sperrglied(8) den Druck der Andruckmittel(3) auf die flexible Dichtung(6) überträgt.

10. Kupplung nach Anspruch 8 oder 9, wobei das Sperrglied (8) die Form eines Rohr-Spannrings hat.

11. Kupplung nach einem der vorhergehenden Ansprüche, wobei der Kupplungskörper(2) ein Gewinde aufweist und das Andruckmittel(3) eine mit einem entsprechenden Gewinde versehene Druckmutter umfaßt, die eine Öffnung zum Aufnehmen des Rohres(1) aufweist.

12. Kupplung nach Anspruch 11 und Anspruch 10, wobei die Öffnung der Druckmutter durch eine sich nach innen verjüngende Oberfläche zum Aufnehmen des Spannrings begrenzt ist.

## Revendications

1. Raccord de tuyau résistant au feu comprenant un corps de raccord (2) pourvu d'une ouverture pour recevoir le tuyau (1), une garniture de joint souple (6) conçue de façon à entourer le tuyau (1) et à assurer l'étanchéité de l'intervalle compris entre le corps de raccord (2) et le tuyau (1) lorsque le raccord est en service et des moyens (3) pour rappeler la garniture de joint souple (6) dans l'intervalle, dans lequel le raccord comprend une garniture en joint déformable (14) conçue de façon à entourer le tuyau (1) et à être placée adjacente à la garniture en joint souple (6) lorsque le raccord est en service, caractérisé en ce que la garniture déformable (14) est en graphite et elle présente une dimension suffisante pour assurer l'étanchéité dudit intervalle indépendamment de la garniture de joint souple (6) lorsqu'elle est rappelée dans l'intervalle par les moyens (3).

2. Raccord selon la revendication 1 dans lequel la garniture de joint en graphite (14) est réalisée sous la forme d'une bague adjacente à une rondelle de pression (7) pour transmettre l'effort de rappel des moyens de rappel (3) à la garniture de joint souple (6).

3. Raccord selon la revendication 1 ou 2 dans lequel la garniture de joint en graphite (14) est disposée de façon à transmettre l'effort de rappel de moyens de rappel (3) directement sur la garniture de joint souple (6)

4. Raccord selon l'une quelconque des revendications précédentes dans lequel le corps de chauffe (2) est conçu de manière à recevoir un tuyau relativement lisse (1) et son ouverture est délimitée par une surface chanfreinée vers l'intérieur pour recevoir la garniture de joint souple (6) ;

5. Raccord selon la revendication 4 dans lequel la garniture de joint en graphite (14) est conformée de manière à s'adapter à la surface chanfreinée vers l'intérieur de l'ouverture du corps du raccord.

6. Raccord selon l'une quelconque des revendications précédentes dans lequel la garniture de joint en graphite (14) est formée à partir d'une bande de graphite expansé.

7. Raccord selon l'une quelconque des revendications précédentes dans lequel la garniture de joint souple (6) est une bague torique en caoutchouc.

8. Raccord selon l'une quelconque des revendications précédentes comprenant un élément de verrouillage (8) pour résister à l'enlèvement du tuyau (1) du raccord après son assemblage.

9. Raccord selon la revendication 8 dans lequel l'élément de verrouillage (8) transmet l'effort de rappel des moyens de rappel (3) à la garniture de joint flexible (6).

10. Raccord selon la revendication 8 ou 9 dans lequel l'élément de verrouillage (8) présente la forme d'une bague de préhension du tuyau.

11. Raccord selon l'une quelconque des revendications précédentes dans lequel le corps de raccord (2) et fileté et les moyens de rappel (3) comprennent un écrou de compression fileté de manière correspondante et muni d'une ouverture pour recevoir le tuyau (1).

12. Raccord selon la revendication 11 , lorsqu'elle dépend de la revendication 10, dans lequel l'ouverture pour l'écrou de compression est délimité par des surfaces chanfreinée vers l'intérieur pour recevoir la bague de préhension.

FIG. 1.

FIG. 2.